# EUROPÄISCHE PATENTSCHRIFT

(11) **EP 1 194 320 B1**
(45) Veröffentlichungstag und Bekanntmachung des Hinweises auf die Patenterteilung: **27.07.2005**
(21) Anmeldenummer: 00940257.9
(22) Anmeldetag: 20.05.2000
(51) Int. Cl.: B60T 8/18, B60T 8/00, B60T 7/04

(54) **SCHLEPPFAHRZEUG FÜR FLUGZEUGE**
TOWING VEHICLE FOR AIRCRAFT
REMORQUEUR POUR AVIONS

(30) Priorität: 09.07.1999 DE 19931865
(43) Veröffentlichungstag der Anmeldung: 10.04.2002
(73) Patentinhaber: SCHOPF MASCHINENBAU GMBH, D-73760 Ostfildern (DE)
(72) Erfinder: DIEZ, Helmut, D-70794 Filderstadt (DE); PHILIPP, Klaus, D-71334 Waiblingen (DE)
(74) Vertreter: Wolf, Eckhard, Dr.-Ing.
(86) Internationale Anmeldenummer: PCT/EP2000/004549
(87) Internationale Veröffentlichungsnummer: WO 2001/003986

(56) Entgegenhaltungen:
- EP-A- 0 937 623
- US-A- 4 113 041
- US-A- 4 923 253
- US-A- 5 048 625

## Beschreibung

Die Erfindung betrifft ein Schleppfahrzeug für Flugzeuge, mit mindestens einem Fahrerstand, der Steuerelemente für das Lenken, das Beschleunigen und das Abbremsen des Schleppfahrzeugs umfaßt, und mit einem als Schleppstange ausgebildeten Kupplungsorgan zur Herstellung einer lösbaren Verbindung zwischen Flugzeug und Schleppfahrzeug, wobei mindestens in einem der Fahrzeugendbereiche ein Kupplungselement für die Schleppstange angeordnet ist, wobei das Schleppfahrzeug durch hydraulisch oder pneumatisch auf mindestens zwei Räder des Fahrzeugs wirkende Bremsen abbremsbar ist und wobei das Steuerelement zum Abbremsen als ein die Bremsen direkt oder über einen Steuerkreis betätigendes Bremspedal ausgebildet ist.

Flugzeugschlepper sind Kraftfahrzeuge, die eine wesentlich größere Masse als die Eigenmasse schleppen, schieben und abbremsen müssen. Hieraus ergeben sich insbesondere für das Bremssystem des Schleppfahrzeugs spezielle Anforderungen, insbesondere wenn berücksichtigt wird, daß die Betriebssicherheit des Schleppfahrzeugs unter stark unterschiedlichen Betriebsbedingungen (Schleppbetrieb bzw. Leerfahrt) gewährleistet sein muß. Flugzeugschlepper lassen sich generell in Stangenschlepper ("Towbar-Tractor") und stangenlose Schlepper ("Towbarless-Tractor") unterteilen. Zwar ist die vorliegende Erfindung bevorzugt für Stangenschlepper bestimmt, kann jedoch auch für stangenlose Schlepper eingesetzt werden.

Bekannte Flugzeugschlepper weisen eine herkömmliche Hydraulikbremse auf, bei der das Bremspedal im wesentlichen unmittelbar auf das Bremsmedium (Hydrauliköl) einwirkt. Die Bremskraft wird dabei durch Proportionalventile gesteuert, die eine der Bremspedalstellung proportionale Bremswirkung erzeugen. Ferner sind auch vorgesteuerte Bremsen bekannt, bei denen das Bremspedal einen Steuerkreis öffnet oder schließt, weicher ein Relaisventil ansteuert, das die Bremswirkung im Hauptkreis auslöst. Ein Nachteil der bekannten Bremssysteme besteht darin, daß zwischen dem Bremspedal bzw. dem in unmittelbarer Nähe des Bremspedals angeordneten Hauptbremsventil und den Bremsen relativ lange Bremsleitungen angeordnet sind. Neben dem hohen Leitungsaufwand besteht der wesentliche Nachteil der bekannten Bremssysteme darin, daß aufgrund von Kompressibilitäten im Leitungssystem (Ausdehnung von Bremsschläuchen unter Druck) Verzögerungen zwischen der Betätigung des Bremspedals und dem Eintritt der Bremswirkung auftreten, die zu einer ungenauen Bremswirkung führen. Durch sogenannte schwammige Bremsen kann es zu Überbremsungen bzw. Überreaktionen kommen, außerdem treten Rückwirkungen auf das Pedal auf, die vom Bediener gespürt werden. Insgesamt sind die bekannten Bremssysteme wenig feinfühlig.

Ein weiterer Nachteil der bekannten Bremssysteme besteht darin, daß die Hydraulikleitungen bis zum Fahrerstand geführt werden müssen. Im Bremssystem entstehende Wärme und Geräusche werden in störender Weise in den Fahrerstand übertragen. Hinzu kommt die Unfallgefahr durch platzende Schläuche oder durch Leckagen in Fahrernähe. Schließlich wird bei den bekannten Bremssystemen als nachteilig empfunden, daß zusätzliche Signale von Betriebssensoren nur indirekt in das System eingeführt werden können. Dynamische Einflußgrößen sind aufgrund der Trägheit der hydraulischen Systeme praktisch nicht ausregelbar.

Eine Vorrichtung der eingangs genannten Art ist aus der US-A 4113041 bekannt. Bei dieser bekannten Vorrichtung soll eine konstante Zugkraft zwischen dem Schleppfahrzeug und dem geschleppten Flugzeug hergestellt bzw. beibehalten werden, wobei die Bremskräfte ausschließlich durch das Bremssystem des Flugzeugs erzeugt werden. Die gemessene Zugkraft zwischen Schleppfahrzeug und Flugzeug dient dabei als Parameter für die Steuerung der Bremskraft. Als nachteilig wird bei dieser Vorrichtung empfunden, dass der Führer des Flugzeugs aktiv in den Bremsvorgang eingreifen muss und eine Stabilisierung des Schleppverbunds nicht unter allen Umständen gewährleistet ist.

Ausgehend hiervon liegt der Erfindung die Aufgabe zugrunde, ein Schleppfahrzeug für Flugzeuge mit einem Bremssystem bereitzustellen, das dem Fahrer des Fahrzeugs ermöglicht, den Schleppverbund sicher und mit höherer Reschwindigkeit als bisher möglich zu bewegen, ohne dass ein Eingreifen des Piloten des Flugzeugs erforderlich wäre.

Diese Aufgabe wird gemäß der Erfindung durch die Merkmalskombination des Patentanspruchs 1 gelöst. Vorteilhafte Ausgestaltungen und Weiterbildungen der Erfindung ergeben sich aus den abhängigen Ansprüchen.

Die Erfindung geht von dem Gedanken aus, daß durch den Einsatz einer elektronischen Bremsregelung der notwendige Hydraulikaufwand minimiert werden kann und daß von unterschiedlichen Betriebssensoren gelieferte Signale zur Bremsregelung herangezogen werden können. Gemäß der Erfindung ist daher vorgesehen, daß das Bremspedal jeweils mit einem Weg- oder Winkelgeber gekoppelt ist, dessen Weg oder Winkel in ein elektrisches Sollwert-Stellsignal umsetzbar ist, das über eine elektrische Signalübertragungsstrecke mindestens ein elektrohydraulisches Bremsventil regelt, dass der Regelkreis für die Bremsen eine elektronische Recheneinheit als Steuergerät umfasst, dem zumindest das Stellsignal des Bremspedals als Regelgröße zuführbar ist, dass das Kupplungselement einen Sensor für den Schleppwinkel zwischen Flugzeug und Schleppfahrzeug und einen Sensor für Zug- und/oder Druckkräfte zwischen Schleppfahrzeug und Flugzeug aufweist, dass das Schleppfahrzeug mindestens einen Sensor für die Fahrzeuggeschwindigkeit und mindestens einen Sensor für die Lenkstellung aufweist, wobei an den Sensoren elektrische Signale als Parameter für die Regelung der Brems- und/oder Antriebskräfte des Schleppfahrzeugs abgreifbar sind, die dem Steuergerät als Eingangssignale zuführbar sind, und dass das Steuergerät eine elektronische Speichereinheit umfasst, in der Kennlinien für die Brems- und/oder Antriebsregelung nach Maßgabe der an den Sensoren abgegriffenen Signale speicherbar sind. Zweckmäßig sind aus Sicherheitsgründen zwei separate Bremskreise vorgesehen, die jeweils gemeinsam durch Betätigung des Bremspedals angesteuert werden. Hierbei umfaßt jeder Bremskreis zweckmäßig ein den Bremsdruck steuerndes, als Proportionalventil ausgebildetes und ein Betätigungsstößel aufweisendes Hauptbremsventil, mit dem entweder der Durchflußquerschnitt oder bevorzugt der Druck im Bremskreis bestimmt wird.

Sowohl beim Schleppen als auch beim Schieben eines Flugzeuges ist es wichtig, daß der Bediener des Schleppfahrzeugs Übersicht über die jeweilige Fahrtrichtung behält. Da in der Regel während eines Manövriervorgangs das Flugzeug sowohl geschleppt als auch geschoben wird, sind in bevorzugter Ausgestaltung der Erfindung zwei jeweils in einem der Fahrzeugendbereiche angeordnete Fahrerstände vorgesehen, die jeweils mit den gleichen Steuerelementen bestückt sind.

Das Hauptbremsventil kann jeweils durch einen elektronisch geregelten, mittels mindestens eines Magnetventils betätigbaren und einen Wegaufnehmer aufweisenden Verstellkolben betätigbar sein, wobei an dem Wegaufnehmer ein elektrischer Istwert für den Regelkreis abgreifbar ist. Aus Sicherheitsgründen sollte der Verstellkolben hierbei einen von dem Betätigungsstößel des Hauptbremsventils getrennten, gegen diesen anliegenden Stößel aufweisen.

Grundsätzlich ist es möglich, statt der Hydraulikbremse auch eine Seilzugbremse oder eine Pneumatikbremse zu verwenden, die auf vergleichbare Weise angesteuert wird. Wichtig ist in jedem Fall, daß in dem Bremsmedium keine zusätzliche Meßstelle vorgesehen werden muß, die zur Regelung oder Steuerung des Systems notwendig wäre. Die eigentliche Regelung des Bremssystems erfolgt in einer Vorstufe vor dem die Bremsen selbst betätigenden Hydraulikkreis.

Der Regelkreis weist demnach das Pedal als Sollwertgeber auf, während der Istwert an dem Wegaufnehmer des Verstellkolbens für das Hauptbremsventil abgegriffen wird. Mittels der elektronischen Recheneinheit wird der Istwert ständig mit dem Sollwert verglichen und bei Bedarf entsprechend nachgeregelt.

Der Sensor für den Schleppwinkel ist vorzugsweise als Winkelgeber ausgebildet und der Sensor für Zug- und/oder Druckkräfte zwischen Schleppfahrzeug und Flugzeug ist vorzugsweise als Dehnmeßstreifen ausgebildet.

In der elektronischen Speichereinheit können unterschiedliche Kennlinien für verschiedene Flugzeugtypen sowie unterschiedliche Kennlinien für den Schleppbetrieb und für Leerfahrten gespeichert sein. Für Leerfahrten ergibt sich bei gleicher Bremspedalstellung nur ein Bruchteil der im Schleppbetrieb erzielten Bremskraft.

Mit Hilfe der an den unterschiedlichen Sensoren abgegriffenen Signale läßt sich eine umfassende Regelung beim Abbremsen des Schleppfahrzeugs bei Leerfahrten und im Schleppbetrieb erreichen. Durch Einbeziehen der Schub- oder Zugkräfte, die über das geschleppte Flugzeug auf den Schlepper wirken, in die Bremsregelung ist eine Bremskraftanpassung des Schleppers in Abhängigkeit von den genannten Kräften möglich. Wenn zusätzlich der Schleppstangenwinkel als Regelgröße einbezogen wird, können Instabilitäten im Schleppverband wirksam verhindert werden, die entstehen können, wenn der Winkel einen Toleranzbereich von einigen wenigen Grad überschreitet. In diesem Fall kann die Bremskraft automatisch bei gleichbleibender Bremspedalstellung reduziert werden, um ein Ausbrechen des geschleppten Flugzeuges zu verhindern. Eine derartige Situation entsteht insbesondere dann, wenn beim Schleppen in einer Kurve gebremst werden muß. Gegebenenfalls kann hierbei zur Vermeidung kritischer Situationen sogar die Bremskraft auf Null reduziert und der Antriebsmotor des Schleppfahrzeuges zur Beschleunigung angesteuert werden. Die Einbeziehung des Lenkwinkels als Regelungsparameter dient hierbei noch als Unterstützung.

Weiterhin ist es möglich, die Bremskraft in Abhängigkeit der Fahrzeuggeschwindigkeit zu regeln, indem z.B. bei höheren Schleppgeschwindigkeiten eine stärkere Bremswirkung eingeregelt wird, soweit dies unter Berücksichtigung der anderen Regelungsparameter möglich ist. Die gleichzeitige Auswertung der genannten Regelungsparameter erlaubt ein optimales Abbremsen auch unter schwierigen Bedingungen.

Eine weitere Verfeinerung der Bremsregelung wird dadurch erreicht, daß für verschiedene, vorgebbare Flugzeugtypen in Abhängigkeit von deren Gewicht und anderen maßgeblichen Größen unterschiedliche Bremskennlinien in der Speichereinheit des Steuergeräts gespeichert sind.

Im folgenden wird die Erfindung anhand eines in der Zeichnung schematisch dargestellten Ausführungsbeispiels näher erläutert. Es zeigen
- Fig. 1: ein schematisches Schaltbild des Bremssystems eines Schleppfahrzeuges und
- Fig. 2: ein Funktionsschema der Bremsregelung.

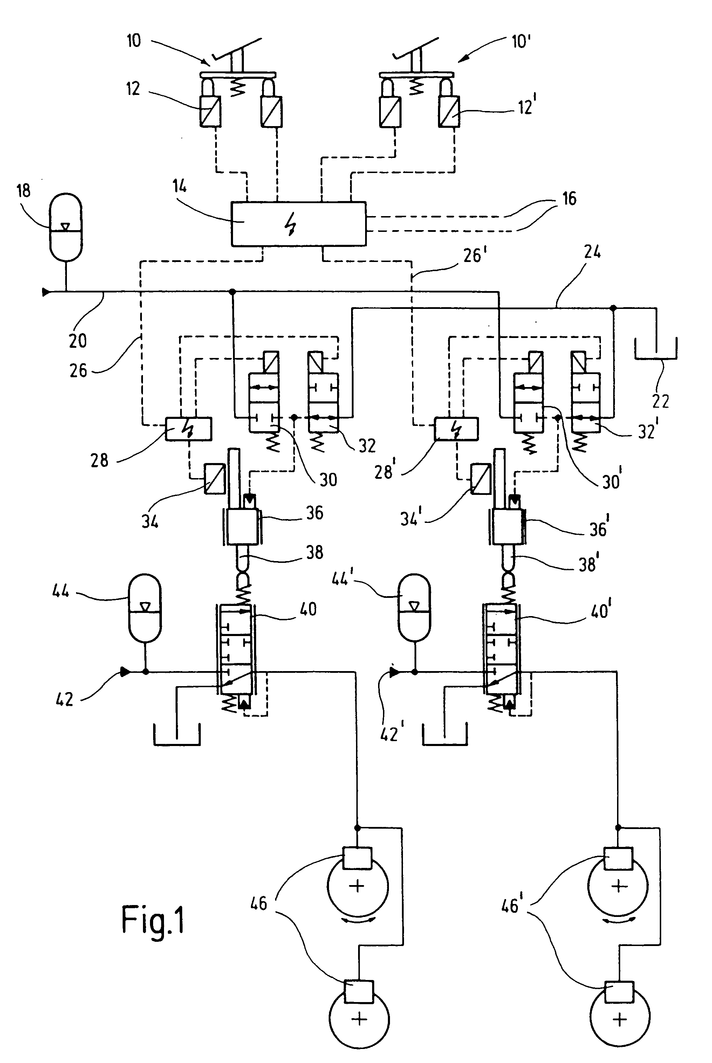

Das in Fig. 1 dargestellte Bremssystem eines Schleppfahrzeugs mit zwei Fahrerständen läßt sich grundsätzlich in einen in der oberen Hälfte der Figur dargestellten elektrohydraulischen Regelkreis und einen im unteren Teil der Figur dargestellten hydraulischen Bremskreis unterteilen. Weiterhin umfaßt das Bremssystem zwei separate, identisch aufgebaute Bremskreise.

Das Bremssystems weist zwei jeweils in einem der Fahrerstände angeordnete Bremspedale 10, 10' auf, die jeweils mit einem Wegaufnehmer 12, 12' versehen sind. Der Wegaufnehmer 12, 12' erzeugt ein elektrisches Signal, das als Sollwert einem Steuergerät 14 zugeführt wird. Neben den Eingängen für die Signale der Wegaufnehmer 12, 12' der Bremspedale 10, 10' weist das Steuergerät 14 weitere Eingänge für Signale von an dem Fahrzeug angeordneten Sensoren für die Fahrzeuggeschwindigkeit, die Lenkstellung, den Schleppwinkel der Schleppstange und für Zug- oder Druckkräfte an der Schleppstange auf, von denen beispielhaft zwei mit 16 gekennzeichnet sind.

Das Steuergerät 14 umfaßt einen Echtzeitrechner für die Auswertung der von den Wegaufnehmern 12, 12' gelieferten Sollwerte und der von den Sensoren 16 gelieferten Meßdaten. Der elektrohydraulische Regelkreis umfaßt einen Hydrospeicher 18 und eine Steuerölversorgungsleitung 20 sowie eine zu einem Ölreservoir 22 führende Rückführleitung 24. Die Ausgangssignale des Steuergeräts 14 werden über elektrische Signalleitungen 26, 26' jeweils einer Steuerelektronik 28, 28' für Magnetventile 30, 32, 30', 32' zugeführt. Die Steuerelektronik 28, 28' umfaßt ferner einen Eingang für ein elektrisches Istwertsignal eines Wegaufnehmers 34, 34', der an einem durch die Magnetventile 30, 32, 30', 32' betätigten hydraulischen Verstellkolben 36, 36' angeordnet ist.

Der an dem Wegaufnehmer 34, 34' ermittelte Istwert wird über die Steuerelektronik 28, 28' dem Steuergerät 14 zugeführt, wo er ständig mit dem Sollwert des Wegaufnehmers 12, 12' verglichen wird. Unter Einbeziehung der Sensorsignale 16 und vorgebbarer weiterer Betriebsparameter, die in dem Steuergerät abgespeichert sind, wird auf diese Weise ein Regelkreis geschaffen.

Der Verstellkolben 36, 36' wirkt über einen Betätigungsstößel 38, 38' auf die Hauptbremsventile 40, 40' der hydraulischen Bremskreise. Diese umfassen jeweils eine Druckölversorgung 42, 42' mit einem Hydrospeicher 44, 44'. Bei Betätigung des Bremspedals 10, 10' wird das Hauptbremsventil 40, 40' durch den geregelten Verstellweg des Verstellkolbens 36, 36' durchgeschaltet, so daß an den Bremsen 46, 46' ein Bremsdruck aufgebaut wird.

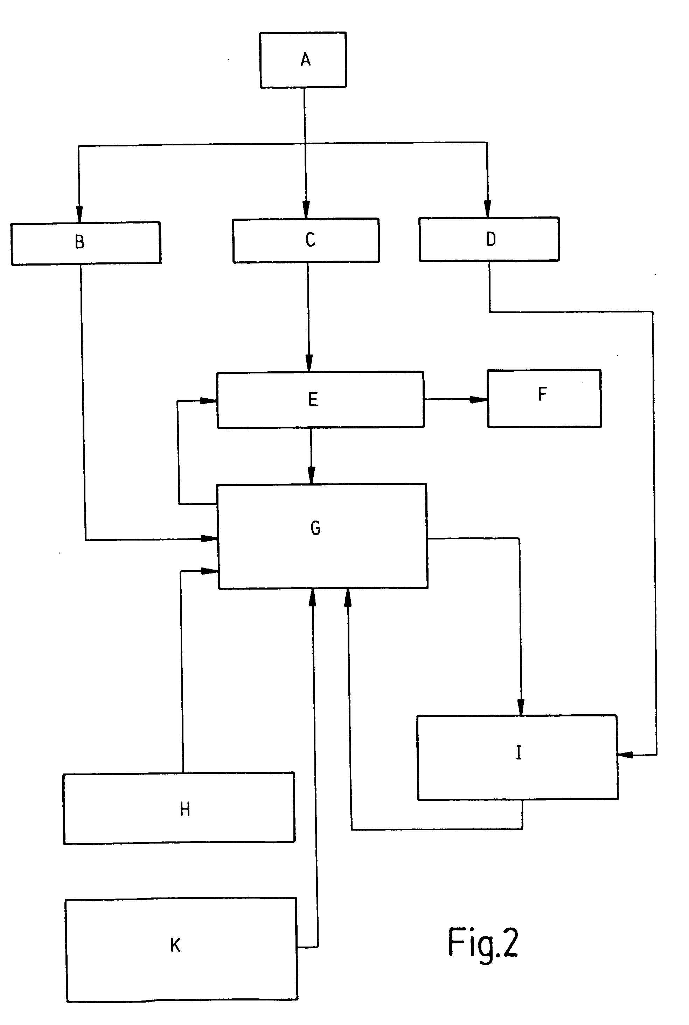

Figur 2 zeigt ein als Blockschaltbild dargestelltes Funktionsschema des Regelkreises. Darin bedeutet:
A: Fahrer
B: Flugzeugtypen
C: Bremspedal mit Wegaufnehmer
D: E-Gas-Einheit
E: Betriebsbremsventilstößel mit Wegmeßsystem
F: Bremskraft
G: Echtzeitrechner für die Auswertung der Sollwerte und der Meßdaten
H: Kraftmessung an der Kupplung der Schleppstange
I: Verbrennungsmotor, Drehzahlsteuerung, Fahrzeuggeschwindigkeit
K: Winkelmessung an der Fahrzeuglängsachse und der Schleppstangenlängsachse

Bei einem Schleppvorgang wird durch den Fahrer A zunächst der Flugzeugtyp B vorgegeben. Weiterhin bedient der Fahrer A das mit dem Wegaufnehmer ausgestattete Bremspedal C sowie ein ebenfalls elektronisch gesteuertes Gaspedal D. Durch Vorgabe des Flugzeugtyps B wird in dem Steuergerät G eine entsprechende, abgespeicherte Kennlinie für die Bremsregelung ausgewählt. Hierdurch wird beispielsweise bei einem schwereren Flugzeugtyp bei gleicher Pedalstellung C eine höhere Bremskraft F erzeugt als für einen leichteren Flugzeugtyp.

Bei einer Betätigung des Bremspedals C wird der dort durch den Wegaufnehmer bestimmte Sollwert an die elektrohydraulische Regelung E,G weitergeleitet und in einen Verstellweg für das Hauptbremsventil umgesetzt. Der an dem Verstellkolben ermittelte Istwert wird in dem Steuergerät G beständig mit dem Sollwert verglichen und unter Berücksichtigung der gewählten Bremskennlinie sowie der Regelparameter H, I und K geregelt. Wird beispielsweise eine für den bestehenden Schleppwinkel zu große Bremskraft festgestellt, wird diese automatisch reduziert oder es wird sogar kurzzeitig der Verbrennungsmotor I angesteuert, um den Schleppverband zu stabilisieren. Auf diese Weise kann unter allen Betriebsbedingungen ein optimaler Bremsweg erreicht werden. Dies erlaubt es sogar, die Schleppgeschwindigkeit gegenüber herkömmlichen Schleppfahrzeugen deutlich zu erhöhen.

Zusammenfassend ist folgendes festzustellen: Die Erfindung betrifft ein Schleppfahrzeug für Flugzeuge mit mindestens einem Fahrerstand, der Steuerelemente für das Lenken, das Beschleunigen und das Abbremsen des Schleppfahrzeugs umfaßt, und mit einem Kupplungsorgan zur Herstellung einer lösbaren Verbindung zwischen Flugzeug und Schleppfahrzeug, wobei das Schleppfahrzeug durch hydraulisch oder pneumatisch auf mindestens zwei Räder des Fahrzeugs wirkende Bremsen 46, 46' abbremsbar ist und wobei das Steuerelement zum Abbremsen als ein die Bremsen 46, 46' direkt oder über einen Steuerkreis betätigendes Bremspedal 10, 10' ausgebildet ist. Um den Aufbau des Bremssystems zu vereinfachen und unter allen Betriebszuständen ein optimales Bremsverhalten zu gewährleisten, wird gemäß der Erfindung vorgeschlagen, daß das Bremspedal 10, 10' jeweils mit einem Weg- oder Winkelgeber 12, 12' gekoppelt ist, dessen Weg oder Winkel in ein elektrisches Sollwert-Stellsignal umsetzbar ist, das über eine elektrische Signalübertragungsstrecke 26, 26' mindestens ein elektrohydraulisches Bremsventil regelt.

## Patentansprüche

1. Schleppfahrzeug für Flugzeuge, mit mindestens einem Fahrerstand, der Steuerelemente für das Lenken, das Beschleunigen und das Abbremsen des Schleppfahrzeugs umfaßt, und mit einem als Schleppstange ausgebildeten Kupplungsorgan zur Herstellung einer lösbaren Verbindung zwischen Flugzeug und Schleppfahrzeug, wobei mindestens in einem der Fahrzeugendbereiche ein Kupplungselement für die Schleppstange angeordnet ist, wobei das Schleppfahrzeug durch hydraulisch oder pneumatisch auf mindestens zwei Räder des Fahrzeugs wirkende Bremsen (46, 46') abbremsbar ist und wobei das Steuerelement zum Abbremsen als ein die Bremsen (46, 46') direkt oder über einen Steuerkreis betätigendes Bremspedal (10, 10') ausgebildet ist, **dadurch gekennzeichnet, daß** das Bremspedal (10, 10') jeweils mit einem Weg- oder Winkelgeber (12, 12') gekoppelt ist, dessen Weg oder Winkel in ein elektrisches Sollwert-Stellsignal umsetzbar ist, das über eine elektrische Signalübertragungsstrecke (26, 26') mindestens ein elektrohydraulisches Bremsventil regelt, daß der Regelkreis für die Bremsen (46, 46') eine elektronische Recheneinheit als Steuergerät (14) umfaßt, dem zumindest das Stellsignal des Bremspedals (10, 10') als Regelgröße zuführbar ist, daß das Kupplungselement einen Sensor (16) für den Schleppwinkel zwischen Flugzeug und Schleppfahrzeug und einen Sensor (16) für Zug- und/oder Druckkräfte zwischen Schleppfahrzeug und Flugzeug aufweist, daß das Schleppfahrzeug mindestens einen Sensor (16) für die Fahrzeuggeschwindigkeit und mindestens einen Sensor (16) für die Lenkstellung aufweist, wobei an den Sensoren (16) elektrische Signale als Parameter für die Regelung der Brems- und/oder Antriebskräfte des Schleppfahrzeugs abgreifbar sind, die dem Steuergerät (14) als Eingangssignale zuführbar sind, und daß das Steuergerät (14) eine elektronische Speichereinheit umfaßt in der Kennlinien für die Brems- und/oder Antriebsregelung nach Maßgabe der an den Sensoren (16) abgegriffenen Signale speicherbar sind.

2. Schleppfahrzeug nach Anspruch 1, **gekennzeichnet durch** zwei jeweils in einem Fahrzeugendbereich angeordnete Fahrerstände.

3. Schleppfahrzeug nach Anspruch 1 oder 2, **gekennzeichnet durch** zwei separate Bremskreise, die gemeinsam **durch** das in jedem der zwei Fahrerstände angeordnete Bremspedal (10, 10') betätigbar sind.

4. Schleppfahrzeug nach Anspruch 3, **dadurch gekennzeichnet, daß** jeder Bremskreis ein den Bremsdruck steuerndes, als Proportionalventil ausgebildetes und einen Betätigungsstößel aufweisendes Hauptbremsventil (40, 40') umfaßt.

5. Schleppfahrzeug nach Anspruch 4, **dadurch gekennzeichnet, daß** das Hauptbremsventil (40, 40') durch einen elektronisch geregelten, mittels mindestens eines Magnetventils (30, 32, 30', 32') betätigbaren und einen Wegaufnehmer (34, 34') aufweisenden Verstellkolben (36, 36') betätigbar ist, wobei an dem Wegaufnehmer (34, 34') ein elektrischer Istwert für den Regelkreis abgreifbar ist.

6. Schleppfahrzeug nach Anspruch 5, **dadurch gekennzeichnet, daß** der Verstellkolben (36, 36') einen von dem Betätigungsstößel des Hauptbremsventils (40, 40') getrennten, gegen diesen anliegenden Stößel (38, 38') aufweist.

7. Schleppfahrzeug nach einem der Ansprüche 1 bis 6, **dadurch gekennzeichnet, daß** der Sensor (16) für den Schleppwinkel zwischen Flugzeug und Schleppfahrzeug als Winkelgeber ausgebildet ist.

8. Schleppfahrzeug nach einem der Ansprüche 1 bis 7, **dadurch gekennzeichnet, daß** der Sensor (16) für Zug- und/oder Druckkräfte zwischen Schleppfahrzeug und Flugzeug als Dehnmeßstreifen ausgebildet ist.

9. Schleppfahrzeug nach einem der Ansprüche 1 bis 8, **dadurch gekennzeichnet, daß** in der elektronischen Speichereinheit unterschiedliche Kennlinien für verschiedene Flugzeugtypen gespeichert sind.

10. Schleppfahrzeug nach einem der Ansprüche 1 bis 9, **dadurch gekennzeichnet, daß** in der elektronischen Speichereinheit unterschiedliche Kennlinien für den Schleppbetrieb und für Leerfahrten gespeichert sind, wobei sich für Leerfahrten bei gleicher Bremspedalstellung nur ein Bruchteil der im Schleppbetrieb erzielten Bremskraft ergibt.

## Claims

1. Towing vehicle for aircraft, with at least one driver's cab, comprising control elements for steering, accelerating and braking the towing vehicle, and with a coupling organ constructed as a towbar for producing a detachable connection between the aircraft and the towing vehicle, wherein a coupling element for the towbar is arranged in at least one of the vehicle end regions, wherein the towing vehicle can be braked by brakes (46, 46') acting hydraulically or pneumatically on at least two wheels of the vehicle and wherein the control element for braking is constructed as a brake pedal (10, 10') actuating the brakes (46, 46') directly or via a control circuit, **characterised in that** the brake pedal (10, 10') is coupled in each case to a path or angle transducer (12, 12'), the path or angle of which can be converted into an electrical desired value adjusting signal which regulates at least one electro-hydraulic brake valve via an electrical signal transmission route (26, 26'), **in that** the regulator circuit for the brakes (46, 46') comprises an electronic computer unit as control device (14), to which at least the adjusting signal of the brake pedal (10, 10') can be fed as regulating variable, **in that** the coupling element has one sensor (16) for the towing angle between the aircraft and the towing vehicle and one sensor (16) for tractive and/or pressure forces between the towing vehicle and the aircraft, **in that** the towing vehicle has at least one sensor (16) for the vehicle speed and at least one sensor (16) for the steering position, wherein electrical signals can be tapped on the sensors (16) as parameters for the regulation of the braking and/or drive forces of the towing vehicle and can be fed to the control device (14) as input signals and **in that** the control device (14) comprises an electronic memory unit in which characteristic curves for the braking and/or drive regulation can be stored subject to the signals tapped on the sensors (16).

2. Towing vehicle according to claim 1, **characterised by** two driver's cabs arranged in each case in a vehicle end region.

3. Towing vehicle according to claim 1 or 2, **characterised by** two separate braking circuits which are jointly actuatable by the brake pedal (10, 10') arranged in each of the two driver's cabs.

4. Towing vehicle according to claim 3, **characterised in that** each braking circuit comprises a main brake valve (40, 40') controlling the brake pressure, constructed as a proportional valve and having an actuating plunger.

5. Towing vehicle according to claim 4, **characterised in that** the main brake valve (40, 40') can be actuated by an electronically regulated adjusting piston (36, 36') actuatable by means of at least one magnetic valve (30, 32, 30', 32') and having a path transducer (34, 34'), wherein an electrical actual value for the regulator circuit can be tapped on the path transducer (34, 34').

6. Towing vehicle according to claim 5, **characterised in that** the adjusting piston (36, 36') has a plunger (38, 38') separate from the actuating plunger of the main brake valve (40, 40') and resting against it.

7. Towing vehicle according to one of claims 1 to 6, **characterised in that** the sensor (16) for the towing angle between the aircraft and the towing vehicle is constructed as an angle transducer.

8. Towing vehicle according to one of claims 1 to 7, **characterised in that** the sensor (16) for tractive and/or pressure forces between the towing vehicle and the aircraft is constructed as a strain gauge.

9. Towing vehicle according to one of claims 1 to 8, **characterised in that** different characteristic curves for various types of aircraft are stored in the electronic memory unit.

10. Towing vehicle according to one of claims 1 to 9, **characterised in that** different characteristic curves for the towing operation and for empty runs are stored in the electronic memory unit, wherein only a fraction of the braking force achieved in towing operation results for empty runs with the same brake pedal position.

## Revendications

1. Véhicule tracteur pour avions avec au moins un poste de conduite qui comprend des éléments de commande pour le guidage, l'accélération et le freinage du véhicule tracteur, et avec un organe d'accouplement sous la forme d'une barre de tractage pour établir une liaison amovible entre avion et véhicule tracteur, un élément d'accouplement pour la barre de tractage étant disposé dans au moins une des zones d'extrémité du véhicule, le véhicule tracteur pouvant être freiné par des freins (46, 46') agissant hydrauliquement ou pneumatiquement sur au moins deux roues du véhicule et l'élément de commande pour le freinage étant réalisé sous la forme d'une pédale de frein (10, 10') actionnant les freins (46, 46'), directement ou par l'intermédiaire d'un circuit de commande, **caractérisé par le fait que** la pédale de frein (10, 10') est couplée à un capteur de course ou d'angle (12, 12') dont la course ou l'angle peut être converti(e) en un signal de commande de valeur de consigne électrique qui, par l'intermédiaire d'une ligne de transmission de signaux électrique (26, 26'), régule au moins une valve de frein électrohydraulique, que le circuit de régulation des freins (46, 46') comprend une unité de calcul électronique comme appareil de commande (14), auquel au moins le signal de commande de la pédale de frein (10, 10') peut être amené en tant que grandeur de réglage, que l'élément d'accouplement présente un capteur (16) pour l'angle de tractage entre avion et véhicule tracteur et un capteur (16) pour les forces de traction et/ou de poussée entre véhicule tracteur et avion, que le véhicule tracteur présente au moins un capteur (16) pour la vitesse du véhicule et au moins un capteur (16) pour la position de braquage, des signaux électriques pouvant être prélevés aux capteurs (16) en tant que paramètres pour la régulation des forces de freinage et/ou d'entraînement du véhicule tracteur, lesquels peuvent être amenés à l'appareil de commande (14) en tant que signaux d'entrée, et que l'appareil de commande (14) comprend une unité de mémoire électronique dans laquelle peuvent être stockées des courbes caractéristiques pour la régulation du freinage et/ou de l'entraînement en fonction des signaux prélevés aux capteurs (16).

2. Véhicule tracteur selon la revendication 1, **caractérisé par** deux postes de conduite disposés chacun dans une zone d'extrémité du véhicule.

3. Véhicule tracteur selon la revendication 1 ou 2, **caractérisé par** deux circuits de freinage séparés qui peuvent être actionnés en commun par la pédale de frein (10, 10') disposée dans chacun des deux postes de conduite.

4. Véhicule tracteur selon la revendication 3, **caractérisé par le fait que** chaque circuit de freinage comprend une valve de frein principale (40, 40') réalisée sous la forme d'une vanne proportionnelle et présentant une tige de commande.

5. Véhicule tracteur selon la revendication 4, **caractérisé par le fait que** la valve de frein principale (40, 40') peut être actionnée par un piston de commande (36, 36') à régulation électronique, actionnable au moyen d'au moins une électrovanne (30, 32, 30', 32') et présentant un capteur de course (34, 34'), une valeur réelle électrique pouvant être prélevée sur le capteur de course (34, 34') pour le circuit de régulation.

6. Véhicule tracteur selon la revendication 5, **caractérisé par le fait que** le piston de commande (36, 36') présente une tige (38, 38') séparée de la tige de commande de la valve de frein principale (40, 40'), en appui contre celle-ci.

7. Véhicule tracteur selon l'une des revendications 1 à 6, **caractérisé par le fait que** le capteur (16) pour l'angle de tractage entre avion et véhicule tracteur est réalisé sous la forme d'un capteur angulaire.

8. Véhicule tracteur selon l'une des revendications 1 à 7, **caractérisé par le fait que** le capteur (16) pour les forces de traction et/ou de poussée entre véhicule tracteur et avion est réalisé sous la forme d'une jauge de contrainte.

9. Véhicule tracteur selon l'une des revendications 1 à 8, **caractérisé par le fait que** différentes courbes caractéristiques pour différents types d'avions sont stockées dans l'unité de mémoire électronique.

10. Véhicule tracteur selon l'une des revendications 1 à 9, **caractérisé par le fait que** différentes courbes caractéristiques pour le tractage et pour les marches à vide sont stockées dans l'unité de mémoire électronique, sachant que pour les marches à vide, à position de pédale de frein égale, il en résulte une force de freinage qui n'est qu'une fraction de celle obtenue en tractage.
